# EUROPÄISCHE PATENTSCHRIFT

(11) **EP 2 910 833 B1**
(45) Veröffentlichungstag und Bekanntmachung des Hinweises auf die Patenterteilung: **08.11.2017**
(21) Anmeldenummer: 15153188.6
(22) Anmeldetag: 30.01.2015
(51) Int. Cl.: F16L 47/12

(54) **Rohrverbindungsvorrichtung**
Pipe connection device
Dispositif de liaison de conduits

(30) Priorität: 21.02.2014 DE 102014203145
(43) Veröffentlichungstag der Anmeldung: 26.08.2015
(73) Patentinhaber: Poloplast GmbH & Co. KG, 4060 Leonding (AT)
(72) Erfinder: Miethlinger, Jürgen, Dr., 4851 Gampern (AT); Mayrbäurl, Erwin, 4481 Asten (AT); Atzmüller, August, 4174 Niederwaldkirchen (AT)
(74) Vertreter: Hoefer & Partner Patentanwälte mbB

(56) Entgegenhaltungen:
- EP-B1- 1 798 459
- US-A1- 2006 232 063
- US-A1- 2012 242 083

## Beschreibung

Die Erfindung bezieht sich auf eine Rohrverbindungsvorrichtung gemäß dem Oberbegriff des Hauptanspruchs.

Im Einzelnen bezieht sich die Erfindung auf eine Rohrverbindungsvorrichtung, mittels derer Kunststoffrohre aneinander fixiert werden, die über eine Steckmuffe verbunden sind. Dabei wird ein Rohrende (Spitzende) in eine Rohrmuffe eingeschoben. Die Abdichtung erfolgt mittels zumindest eines Dichtrings in der Steckmuffe. Eine axiale Fixierung ist durch derartige bekannte Konstruktionen jedoch nicht oder nur in geringerem Maße gegeben.

Insbesondere bei Kunststoffabflussrohren ist es für bestimmte Einbausituationen erforderlich, diese nachträglich gegen unbeabsichtigtes Auseinanderziehen in axialer Richtung zu sichern.

Der Stand der Technik zeigt bei Druckwasserrohren Lösungen, bei welchen metallische Krallen oder Klammern aufgesetzt werden. Diese Lösungen erfordern jedoch Rohre mit großen Wandstärken und hohen Montagekräften, um ein Eindringen der Krallen in die Rohroberfläche zu gewährleisten.

Demgegenüber sind Kunststoffabflussrohre, insbesondere für den Hausabflussbereich, dünnwandig ausgestaltet. Die Verwendung der vorbekannten Rohrverbindungsvorrichtung für diesen Anwendungszweck scheidet somit aus.

Die US 2005/0253380 A1 beschreibt eine Rohrverbindungsvorrichtung zur formschlüssigen Verbindung zweier Rohrenden mit zwei starren, halbschalenartigen Halteelementen, welche einen im Wesentlichen U-förmigen Querschnitt aufweisen. In dem U-förmigen Querschnitt ist ein Dichtungsring eingelegt, die beiden Flanken des U-förmigen Querschnitts sind mit vorspringenden verzahnten Bereichen versehen, die in die Oberfläche der Rohre eindrückbar sind.

Die US 4,471,979 A zeigt eine Rohrverbindungsvorrichtung mit zwei starren halbschalenartigen Halteelementen, welche einen mittigen Dichtungsring umschließen und formschlüssig mit den Rohrenden verankerbar sind.

Aus der DE 100 06 029 A1 ist eine Rohrverbindungsvorrichtung mit einem radial erweiterbaren Haltering vorbekannt, welche ebenfalls ein mittiges Dichtungsprofil umfasst und mit Messerringen versehen ist, welche zackenartige Vorsprünge umfassen.

In der EP 1 798 459 B1 ist eine Rohrverbindungsvorrichtung nach dem Oberbegriff des Anspruchs 1 mit zwei Halteelementen aus Kunststoff dargestellt, welche so gestaltet sind, dass sie zumindest über eine teilzylindrische Auflagefläche gegen die Außenfläche des Spitzendes anlegbar sind. Zumindest eines der Halteelemente weist dabei zumindest ein radial nach innen ragendes Krallelement auf, welches über die Auflagefläche vorsteht und welches beim Spannen der Rohrverbindungsvorrichtung in die Oberfläche des Spitzendes des Kunststoffrohrs eingedrückt wird. Dieses Eindrücken wird über eine Ovalisierung des Rohrquerschnittes erreicht, damit die erforderlichen Gegenkräfte durch das dünnwandige Rohr aufgebracht werden können. Für dickwandige Rohre steigen bei einer derartigen Ovalisierung die Kräfte derartig an, dass eine Lösung in Kunststoff nicht mehr wirtschaftlich realisiert werden kann.

Die US 2012/242083 A1 zeigt eine Rohrkupplung mit zwei durch ein Gelenk miteinander verbundenen, halbschalenartigen, starren Halteelementen. Die Halteelemente sind mit Rippen versehen, um sie zu versteifen.

Eine Vorrichtung zur Verbindung eines flexiblen Schlauchs mit einem Fitting ist aus der US 2006/232063 A1 bekannt. Dabei wird der Schlauch auf den Fitting aufgeschoben und mittels eines Bindestreifens unter Verwendung von Bandklammern geklemmt. Der Bindestreifen ist als flexibles Element ausgebildet.

Der Erfindung liegt die Aufgabe zugrunde, eine Rohrverbindungsvorrichtung der eingangs genannten Art zu schaffen, welche bei einfachem Aufbau, einfacher Montage und wirtschaftlicher Herstellbarkeit für dünnwandige wie auch für dickwandige Rohre einsetzbar ist, die Montagekräfte minimiert und eine Verformung der Rohrquerschnitte weitestgehend verhindert.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass die Rohrverbindungsvorrichtung zwei Halteelemente aus Kunststoff umfasst, welche so gestaltet sind, dass sie zumindest über je zwei teilzylindrische Auflageflächen gegen die Außenfläche eines Spitzendes und/oder einer Muffe anlegbar sind. Zumindest eines der Halteelemente weist dabei radial nach innen ragende Krallelemente auf, welche über die Auflagefläche vorstehen und welche beim Spannen der Rohrverbindungsvorrichtung in die Oberfläche des Spitzendes und/oder des Muffenbereiches des Kunststoffrohrs eingedrückt werden.

Die Eindringkraft wird in der Weise auf das Rohrstück aufgebracht, dass die zylindrischen Teile der Haltelemente jeweils mittels eines Filmscharniers geteilt und somit in ihrer halbzylindrischen Form variabel sind. Sie werden um das Rohr gebogen und umfassen dieses dann zylindrisch. Dadurch wird ein Ovalisieren des Rohrquerschnittes weitestgehend vermieden und die Ringsteifigkeit des runden Querschnittes vollständig für das Eindringen der Krallen ausgenutzt.

Es ist somit vorgesehen, dass jedes der beiden Halteelemente eine bevorzugt halbzylindrische Auflagefläche aufweist. Zugleich ist jedes Halteelement mittels des scharnierartigen Verbindungsbereichs (Filmscharniers) elastisch unterteilt. Somit führt das halbzylindrische oder teilzylindrische Halteelement in montiertem Zustand nicht dazu, dass das Rohr verformt und ovalisiert wird, so wie dies aus dem Stand der Technik bekannt ist. Die beiden sich ergebenden Teilbereiche jedes Halteelements, welche über den scharnierartigen Verbindungsbereich verbunden sind, sind somit in sich starr. Der scharnierartige Verbindungsbereich ermöglicht jedoch ein Anlegen der beiden Halteelemente gegen die Außenfläche des Rohres und ein Einpressen der Krallelemente mit um den Umfang im Wesentlichen gleichen, in Radialrichtung, bezogen auf die Rohrachse, wirkenden Kräften. Das Rohr wird somit gleichmäßig um seinen gesamten Umfang mit der Eindrückkraft des jeweiligen Krallelements beauftragt. Dies verhindert eine Verformung oder Ovalisierung des Rohres.

Die erfindungsgemäße Rohrverbindungsvorrichtung kann mit oder ohne Dichtung ausgebildet sein. Sie ist weiterhin nicht beschränkt auf die Verbindung eines Spitzendes eines Rohres mit einer Muffe. Vielmehr können auch muffenlose Rohrenden verbunden werden.

Unter Filmscharnier wird, wie oben erläutert, ein biegeweicher, scharnierartiger Verbindungsbereich verstanden, welcher eine radiale Verformung der teilzylindrischen Auflageflächen zum Hauptteil ermöglicht. Die Ausgestaltung des Verbindungsbereichs ist vom verwendeten Kunststoff und der erforderlichen Winkelverformung abhängig.

Durch die jeweils teilzylindrische Auflagefläche wird sichergestellt, dass das dünnwandige Kunststoffrohr infolge Ovalisierung nicht geschädigt wird. Durch das Krallelement ist es jedoch möglich, die Rohrverbindungsvorrichtung derartig formschlüssig mit dem Spitzende des Kunststoffrohrs zu verbinden bzw. an diesem zu verankern, dass ein unbeabsichtigtes Lösen der Verbindung der beiden Kunststoffrohre verhindert wird.

Die Gestaltung des Krallelements kann erfindungsgemäß so ausgebildet sein, dass dieses an die Wanddicke des Kunststoffrohrs und an dessen Aufbau (beispielsweise bei Mehrschichtrohren) in optimaler Weise angepasst ist.

Die beiden erfindungsgemäß vorgesehenen Halteelemente sind einfach und kostengünstig aus Kunststoff herstellbar. Sie können so dimensioniert werden, dass lediglich ein geringer Raumbedarf besteht, so dass die Rohrverbindungsvorrichtung auch in sehr beengten Raumverhältnissen montierbar ist.

Die beiden halbschalenförmigen Halteelemente sind bevorzugter Weise an einem Endbereich mittels einer Gelenkverbindung, mittels einer Schnappverbindung oder einer Schraubverbindung verbindbar.

Das zweite freie Ende der Halteelemente kann erfindungsgemäß mittels einer Schraube gegeneinander verspannt werden. Es ist jedoch auch möglich, einen Hebelmechanismus oder einen sonstigen Spannmechanismus vorzusehen. Auch hierbei eröffnet sich die Möglichkeit, eine platzsparende und einfach herstellbare Ausgestaltung vorzusehen.

Erfindungsgemäß ist es somit möglich, die Rohrverbindungsvorrichtung an bereits montierten Rohrleitungen auf einfache und leichte Weise anzubringen.

Der rückseitige Bereich der beiden Halteelemente kann zumindest einen Teilbereich einer Steckmuffe eines der beiden zu verbindenden Rohre umfassen. Steckmuffen ohne flanschartigen Bereich auf der Steckmuffe können durch Verkrallen von weiteren Krallelementen des Halteelements mit der Steckmuffe fixiert werden. Andere Ausführungsformen, welche mit einem verdickten, flanschartigen oder ringartigen Bereich versehen sind, in welchen die Dichtung eingelegt ist, können auch durch einen Anschlag im rückwärtigen Bereich des Halteelementes die Steckmuffe formschlüssig umgreifen.

Erfindungsgemäß ist vorgesehen, dass das Krallelement in einer axialen Schnittebene einen im Wesentlichen keilförmigen Querschnitt aufweist. Durch dieses Merkmal der Erfindung ist es möglich, den Haltewinkel entsprechend zu dimensionieren und ein sicheres Verkrallen mit der Oberfläche des Rohrs zu gewährleisten.

Weiterhin ist das Krallelement mit zumindest einer Schneide versehen. Diese kann in Form einer scharfen Kante ausgebildet sein, beispielsweise durch eine entsprechende Formtrennung einer Form eines Spritzgusswerkzeuges.

Da erfindungsgemäß die beiden Halteelemente in Teilbereiche unterteilt sind, welche mittels des filmscharnierartigen Verbindungsbereichs relativ zueinander bewegbar sind, ist es besonders vorteilhaft, an den Teilbereichen, welche der Spannvorrichtung zugewandt sind, die Krallelemente so auszubilden, dass sie an einer Seite einen Radius aufweisen. Auf diese Weise wird ein Gleiten des Teilbereichs des Halteelements (Viertelschale) entlang des Umfangs des Rohrs ermöglicht. Hierdurch wird eine gleichmäßige Einkrallung der Krallelemente am Umfang erreicht.

Das Krallelement ist einstückig mit dem Halteelement verbunden. Es ist jedoch auch möglich, dieses aus einem anderen Kunststoffmaterial zu fertigen und/oder mittels eines Zwei-Komponenten-Spritzgießverfahrens herzustellen.

Erfindungsgemäß ist es besonders günstig, wenn sich ein Haltewinkel des Krallelements von annähernd 90° ergibt.

Der Werkstoff für die Halteelemente kann in einfacher Weise an den Werkstoff der Rohre angepasst werden, so dass sich günstige Werkstoffpaarungen ergeben. Für Polyolefinrohre (PP, PB, PE) eignen sich beispielsweise Polyamid-Typen mit einem hohen Glasfasergehalt.

In einer Weiterbildung der Erfindung kann es günstig sein, eine zusätzliche Verdrehsicherung in Umfangsrichtung vorzusehen. Hierdurch wird eine unbeabsichtigte Verdrehung der Verbindungsvorrichtung verhindert, beispielsweise beim Verspannen der beiden Halteelemente mittels einer Schraube. Die zusätzliche Verdrehsicherung kann beispielsweise durch abwechselnde Ausrichtung der Krallelemente, in Richtung zur Rohrachse hin, realisiert werden. Die Krallelemente weisen somit Schneiden auf, welche in einem Winkel ungleich 90° zur Rohrachse geneigt angeordnet sind. Diese Krallelemente sind vorzugsweise nur auf den der Spannvorrichtung abgewandten Viertelschalen angebracht, um ein Gleiten der Viertelschalen, welche der Spannvorrichtung zugewandt sind, zu ermöglichen.

Erfindungsgemäß sind an den Halteelementen mehrere Krallelemente nebeneinander (auf den Zylinderabschnitten um den Umfang verteilt) vorgesehen, die bevorzugterweise zueinander einen Abstand aufweisen. Dies verhindert ein Abtrennen des Rohrstückes durch die Krallelemente, da die Zwischenbereiche so gestaltet werden können, dass die Krallen weniger als die Wanddicke des Rohres hervorstehen. Es ist jedoch auch möglich, in Axialrichtung hintereinander mehrere Krallelemente auszubilden.

Im Folgenden wird die Erfindung anhand eines Ausführungsbeispiels in Verbindung mit der Zeichnung beschreiben. Dabei zeigt:

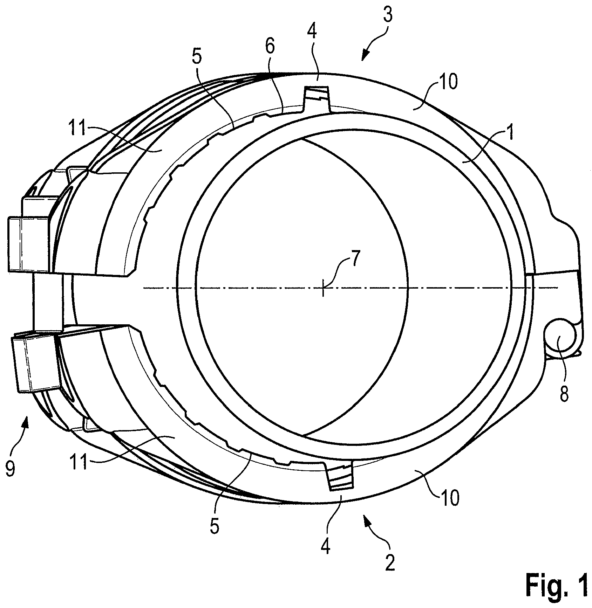

- Fig.1: eine perspektivische Ansicht der erfindungsgemäßen Rohrverbindungsvorrichtung im vormontierten Zustand,

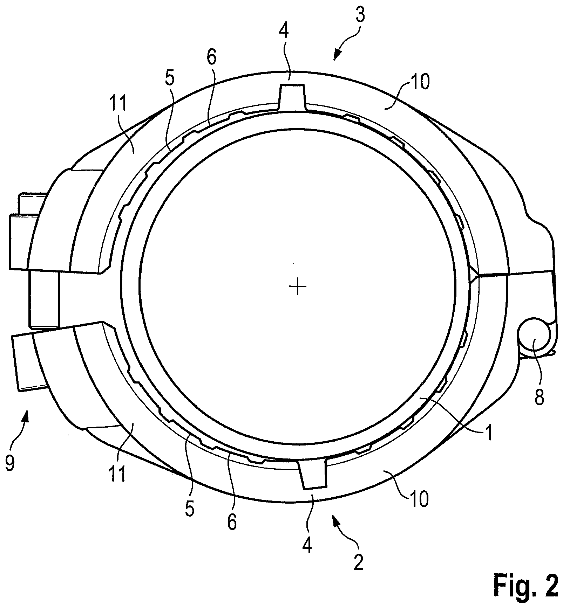

- Fig. 2: eine stirnseitige Ansicht gemäß Fig. 1,
- Fig. 3: eine Ansicht, analog Fig. 1, in fertigmontiertem Zustand,
- Fig. 4: eine stirnseitige Ansicht gemäß Fig. 3, und
- Fig. 5: eine Detailansicht gemäß Fig. 4.

Zur Vereinfachung der Darstellung wurde erfindungsgemäß nur ein Kunststoffrohr 1 schematisch dargestellt, welches eine Rohrachse 7 umfasst. Die Begriffe "axial und radial" beziehen sich jeweils auf die Rohrachse 7.

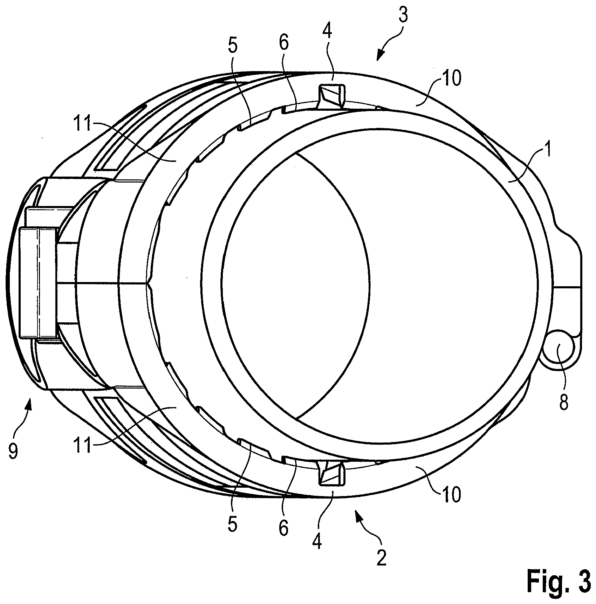

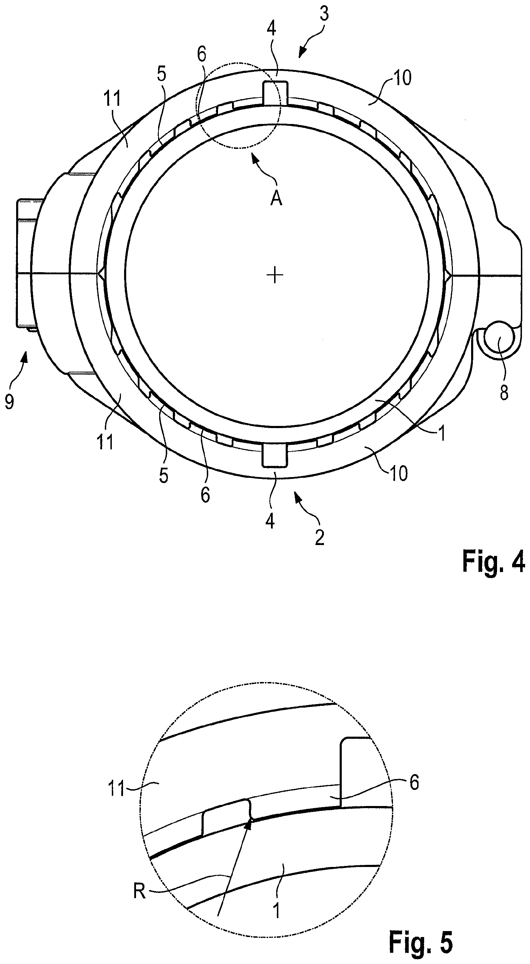

Erfindungsgemäß umfasst die Rohrverbindungsvorrichtung zwei Halteelemente 2, 3, welche im Wesentlichen halbzylindrisch ausgebildet sind. Die beiden Halteelemente 2, 3 sind an einem Endbereich durch ein Gelenk 8 verbunden und werden an ihrem anderen Endbereich mittels einer Spannvorrichtung 9 gegeneinander verspannt, so wie dies in den Fig. 3 und 4 dargestellt ist. Die Spannvorrichtung 9 kann in üblicher Weise eine Schraube umfassen, sie kann jedoch auch in anderer Weise ausgebildet sein, beispielsweise mittels eines Hebels oder eines Verrastungsmechanismus.

Jedes der Halteelemente 2, 3 ist mittels eines im Wesentlichen mittigen (bezogen auf die Umfangslänge jedes Halteelements 2, 3) angeordneten Verbindungsbereichs 4 unterteilt. Die Unterteilung erfolgt somit jeweils in einen Teilbereich 10, welcher dem Gelenk 8 zugewandt ist, und einen Teilbereich 11, welcher der Spannvorrichtung zugewandt ist.

Der Verbindungsbereich 4 ermöglicht eine Verformung des jeweiligen Halteelements 2, 3, so dass die beiden Teilbereiche 10, 11 sich während der Montage relativ zueinander bewegen können. Der Verbindungsbereich 4 ist als Biegebalken ausgebildet und kann deshalb als Filmscharnier dienen.

Die beiden Halteelemente 2, 3 bzw. deren Teilbereiche 10, 11 weisen jeweils eine teilzylindrische Auflagefläche 5 auf, an welcher Krallelemente 6 angeordnet sind. Die Krallelemente 6 sind schneidenförmig ausgebildet und werden bei der Montage der Rohrverbindungsvorrichtung in die Oberfläche des Rohrs 1 eingepresst.

Die erfindungsgemäße Ausgestaltung der Krallelemente ist insbesondere in den Fig. 4 und 5 gezeigt. Wie beschrieben, sind die beiden Halteelemente 2, 3 durch den filmscharnierartigen Verbindungsbereich 4 so unterteilt, dass sich jeweils zwei Teilbereiche 10 und 11 ergeben. Der Teilbereich 10 ist dem Gelenk 8 zugeordnet. Bei einem Aufsetzen der erfindungsgemäßen Rohrverbindungsvorrichtung werden die Krallelemente somit gegen die Oberfläche des Kunststoffrohrs 1 angelegt und können in diese eingedrückt werden. Demgegenüber sind die Teilbereiche 11 bei der Montage in gewissem Maße "geklappt". Diese Relativbewegung der Teilbereiche 11 zu den Teilbereichen 10 wird durch den Verbindungsbereich 4 ermöglicht. Wenn nunmehr die Teilbereiche 11 um das Kunststoffrohr 1 gelegt werden und mit der Spannvorrichtung 9 zusammengespannt werden, ergibt sich eine Bewegung der Krallelemente 6 in Umfangsrichtung des Kunststoffrohrs 1. Damit diese Relativbewegung möglich ist, ist vorgesehen, dass die der Spannvorrichtung 9 zugewandte Eckkante jedes Krallelements 6 mit einem Radius R versehen ist, so wie dies in Fig. 5 verdeutlicht dargestellt ist.

### Bezugszeichenliste

- 1: Kunststoffrohr
- 2: Halteelement
- 3: Halteelement
- 4: Verbindungsbereich
- 5: Auflagefläche
- 6: Krallelement
- 7: Rohrachse
- 8: Gelenk
- 9: Spannvorrichtung
- 10: Teilbereich
- 11: Teilbereich

## Patentansprüche

1. Rohrverbindungsvorrichtung zur formschlüssigen Verbindung zweier Kunststoffrohre (1), wobei die Rohrverbindungsvorrichtung zwei halbschalenartige Halteelemente (2, 3) umfasst, welche aus Kunststoff gefertigt sind und zumindest einen Teilbereich beider Kunststoffrohre (1) umgreifen können und gegeneinander verspannbar sind, wobei jedes Halteelement (2, 3) zumindest eine teilzylindrische Auflagefläche (5) aufweist, welche gegen eine Außenfläche eines der beiden zu verbindenden Kunststoffrohre (1) anlegbar ist, und wobei die beiden Halteelemente (2, 3) jeweils an einem Ende mittels eines Gelenks (8) verbunden sind, wobei zumindest eine Auflagefläche (5) ein Krallelement (6) umfasst, welches schneidenartig ausgebildet ist, **dadurch gekennzeichnet, dass** jedes Halteelement (2, 3) im Wesentlichen mittig, bezogen auf seinen Umfang, mit einem scharnierartigen Verbindungsbereich (4) versehen ist.

2. Vorrichtung nach Anspruch 1, **dadurch gekennzeichnet, dass** der Verbindungsbereich (4) in Form eines Filmscharniers ausgebildet ist.

3. Vorrichtung nach einem der Ansprüche 1 bis 2, **dadurch gekennzeichnet, dass** an dem Halteteil (2, 3) axial hintereinander mehrere Krallelemente (6) ausgebildet sind.

4. Vorrichtung nach einem der Ansprüche 1 bis 3, **dadurch gekennzeichnet, dass** an dem Halteelement (2, 3) zumindest zwei Krallelemente (6) angeordnet sind, welche, bezogen auf eine Radialschnittebene, in einem Winkel ungleich 90° zur Rohrachse angeordnet sind.

5. Vorrichtung nach einem der Ansprüche 1 bis 4, **dadurch gekennzeichnet, dass** zumindest ein Halteelement (2, 3) mit einer Rückwand zur axial sichernden Anlage gegen eine Sicke eines Rohres (1) ausgebildet ist.

6. Vorrichtung nach einem der Ansprüche 1 bis 5, **dadurch gekennzeichnet, dass** die Schneiden des Krallelements (6) im Querschnitt spitzwinklig ausgebildet sind.

7. Vorrichtung nach einem der Ansprüche 1 bis 6, **dadurch gekennzeichnet, dass** die Schneiden des Krallelements (6) in der Seitenansicht keilförmig ausgebildet sind.

8. Vorrichtung nach einem der Ansprüche 1 bis 7, **dadurch gekennzeichnet, dass** die Halteelemente (2, 3) an ihren freien Enden mittels einer Spannvorrichtung (9) gegeneinander verspannbar sind.

9. Vorrichtung nach einem der Ansprüche 1 bis 8, **dadurch gekennzeichnet, dass** die Krallelemente (6) an den Teilbereichen, welche der Spannvorrichtung (9) zugewandt sind, so ausgebildet sind, dass sie an einer Seite der Spannvorrichtung (9) einen Radius aufweisen.

## Claims

1. A pipe connecting device for a form-fit connection of two plastic pipes (1), wherein said pipe connecting device comprises two half-shell-type retaining elements (2, 3) which are made of plastic and which are adapted to encompass at least a partial portion of both plastic pipes (1) and which are tensed against each other, wherein each retaining element (2, 3) has at least a partially cylindrical supporting surface (5), which can be abutted against an outer surface of one of the two plastic pipes (1) to be connected, and wherein the two retaining elements (2, 3) at one end thereof are connected by means of a hinge (8), respectively,
wherein at least a supporting surface (5) comprises a claw member (6), which is formed in the manner of cutting edges, **characterized in that** each retaining element (2, 3) substantially centrally with respect to its periphery is provided with a hinge-like connection portion (4).

2. The device of claim 1, **characterized in that** the connection portion (4) is formed in the shape of a film hinge.

3. The device of claim 1 or 2, **characterized in that** a plurality of claw members (6) are formed axially in a row at the retaining element (2, 3).

4. The device of one of claims 1 to 3, **characterized in that** at least two claw members (6) are provided at the retaining element (3, 4), which are arranged at an angle which is different from 90° relative to the pipe axis with respect to a radial section plane.

5. The device of one of claims 1 to 4, **characterized in that** at least one retaining element (2, 3) is formed with a rear wall for an axially securing abutment against a corrugation of a pipe (1).

6. The device of one of claims 1 to 5, **characterized in that** the cutting edges of the claw member (6) are formed with an acute-angled cross-section.

7. The device of one of claims 1 to 6, **characterized in that** the cutting edges of the claw member (6) are formed, in side view, wedge-shaped.

8. The device of one of claims 1 to 7, **characterized in that** the retaining elements (2, 3) can be tensed against each other at their free ends by means of a tensioning device (9).

9. The device of one of claims 1 to 8, **characterized in that** claw members (6) are formed at partial portions facing the tensioning device (9), as to comprise a radius at the side of the tensioning device (9).

## Revendications

1. Dispositif de liaison de conduits pour la liaison à complémentarité de formes de deux conduits en matière plastique (1), dans lequel le dispositif de liaison de conduits comporte deux éléments de retenue (2, 3) de type demi-coque, lesquels sont fabriqués en matière plastique et peuvent englober au moins une zone partielle de deux conduits en matière plastique (1) et peuvent être serrés l'un contre l'autre, dans lequel chaque élément de retenue (2, 3) présente au moins une surface d'appui (5) cylindrique partielle, laquelle peut être posée contre une surface extérieure d'un des deux conduits en matière plastique (1) à relier, et dans lequel les deux éléments de retenue (2, 3) sont reliés respectivement à une extrémité à l'aide d'une articulation (8),
dans lequel au moins une surface d'appui (5) comporte un élément à griffe (6), lequel est réalisé de type lame, **caractérisé en ce que**
chaque élément de retenue (2, 3) est pourvu sensiblement au milieu, par rapport à sa périphérie, d'une zone de liaison (4) de type charnière.

2. Dispositif selon la revendication 1, **caractérisé en ce que** la zone de liaison (4) est réalisée sous la forme d'une charnière à film.

3. Dispositif selon l'une des revendications 1 à 2, **caractérisé en ce que** plusieurs éléments à griffe (6) sont réalisés sur la partie de retenue (2, 3) axialement les uns derrière les autres.

4. Dispositif selon l'une des revendications 1 à 3, **caractérisé en ce qu'**au moins deux éléments à griffe (6) sont agencés sur l'élément de retenue (2, 3), lesquels sont agencés par rapport à un plan de coupe radiale selon un angle différent de 90° par rapport à l'axe de conduit.

5. Dispositif selon l'une des revendications 1 à 4, **caractérisé en ce qu'**au moins un élément de retenue (2, 3) est réalisé avec une paroi arrière pour l'appui par fixation axiale contre une moulure d'un conduit (1).

6. Dispositif selon l'une des revendications 1 à 5, **caractérisé en ce que** les lames de l'élément à griffe (6) sont réalisées en section transversale selon un angle aigu.

7. Dispositif selon l'une des revendications 1 à 6, **caractérisé en ce que** les lames de l'élément à griffe (6) sont réalisées en forme de coin dans la vue de côté.

8. Dispositif selon l'une des revendications 1 à 7, **caractérisé en ce que** les éléments de retenue (2, 3) peuvent être serrés l'un contre l'autre sur leurs extrémités libres à l'aide d'un dispositif de serrage (9).

9. Dispositif selon l'une des revendications 1 à 8, **caractérisé en ce que** les éléments à griffe (6) sont réalisés sur les zones partielles qui sont tournées vers le dispositif de serrage (9) de sorte à présenter un rayon sur un côté du dispositif de serrage (9).
